**Europäisches Patentamt**

**European Patent Office**

**Office européen des brevets**

(19)

(11) Numéro de publication: **0 139 803**

**B1**

(12)

# FASCICULE DE BREVET EUROPÉEN

(45) Date de publication du fascicule du brevet:
**14.10.87**

(51) Int. Cl.⁴: **H 04 B 1/66**

(21) Numéro de dépôt: **83430035.2**

(22) Date de dépôt: **28.10.83**

(54) **Procédé de reconstitution d'informations perdues dans un système de transmission numérique de la voix et système de transmission utilisant ledit procédé.**

(43) Date de publication de la demande:
**08.05.85 Bulletin 85/19**

(45) Mention de la délivrance du brevet:
**14.10.87 Bulletin 87/42**

(84) Etats contractants désignés:
**DE FR GB**

(56) Documents cité:
**US-A-3 392 336**

**THE BELL SYSTEM TECHNICAL JOURNAL, vol. 56, no. 3, mars 1977, pages 399-409, New York, USA; R. STEELE et al.: "Detection and selective smoothing of transmission errors in linear PCM"**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Callens, Paul, 26, Avenue des Tuilières, F-06800 Cagnes Sur Mer (FR)**
Inventeur: **Galand, Claude, 56, Avenue des Tuillières, F-06800 Cagnes Sur Mer (FR)**
Inventeur: **Platel, Guy, "Les Véroniques" No. 15 Hameaux du Soleil, F-06270 Villeneuve- Loubet (FR)**
Inventeur: **Vermot- Gauchy, Robert, Domaine des Gardettes, F-06570 Saint Paul (FR)**

(74) Mandataire: **Tubiana, Max, Compagnie IBM France Département de Propriété Industrielle, F-06610 La Gaude (FR)**

## Description

La présente invention traite de transmissions numériques de signaux d'origine vocale et plus spécialement de procédés de corrections d'erreurs dues à des pertes de bits ou ensembles de bits entre émetteur et récepteur.

Dans les systèmes de transmissions numériques dites par paquets ou par blocs, les signaux numériques (bits) à transmettre sont disposés en ensembles (blocs ou paquets) de bits. Chaque ensemble comporte des bits significatifs dits de données encadrés par des bits d'adresse du destinataire, des bits de contrôle, et/ou des bits (dits drapeau) délimitant le paquet ou le bloc de bits. Par suite d'erreur de transmission, il arrive parfois qu'un bloc ou un paquet de bits soit n'atteigne pas son destinataire, soit contienne des erreurs. Dans l'un et l'autre cas, le bloc ou paquet de bits peut être considéré comme étant perdu.

Dans certains cas, le récepteur constatant une perte ou une erreur, en avise l'émetteur et lui demande une retransmission. Malheureusement, cela n'est pas toujours possible. En particulier dans les systèmes de transmission de la voix, les opérations doivent être effectuées en temps réel ou avec un retard extrêmement faible ce qui exclut les recours à des retransmissions. Il faut donc prévoir d'autres moyens de récupération ou de reconstitution de l'information perdue. On peut alors tenir compte des propriétés des signaux vocaux pour faciliter cette reconstitution.

Il est, en effet, possible de compenser les bits perdus au niveau du récepteur par des opérations dites d'interpolation ou d'extrapolation à partir des informations non perdues. Les échantillons de signal qui ont été perdus sont calculés à partir des échantillons reçus correctement. Les échantillons calculés sont ensuite réintroduits artificiellement dans le signal soumis à l'auditeur destinataire. L'interpolation ou l'extrapolation se fait selon une loi mathématique plus ou moins complexe. Cette loi peut être linéaire ou parabolique par exemple. Les corrections ainsi réalisées sont, bien qu'étant imparfaites, acceptables par l'oreille humaine lorsque la portion de signal égarée est de courte durée. Il en est autrement lorsque cette portion est de durée relativement longue. Ce qui est le cas dans des systèmes utilisant le mode de transmission dit par paquet où chaque paquet représente 20 à 40 ms de signal par exemple. Il faut alors trouver d'autres moyens de compensation des paquets perdus.

N.S. Jayant et S. W. Christensen ont, dans un article intitulé "Effects of Packet Losses in Waveform Coded Speech and Improvements Due to an Odd-Even Sample-Interpolation Procedure" publié dans IEEE Trans on Communications Vol. Com 2 N° 2, Feb. 81 pp 101-109, proposé un mode de correction. Chaque paquet ou bloc d'échantillons du signal vocal est scindé à l'émission en deux parties. L'une contient les échantillons de rang pair, l'autre ceux de rang impair. La perte d'un paquet se traduit par la perte d'un échantillon sur deux. L'interpolation de paquet est alors remplacée par une interpolation d'échantillons. L'oreille humaine est moins sensible à une telle interpolation. Malheureusement, ce procédé accroît les délais de décodage ce qui est un inconvénient.

Le brevet US 3 392 336 décrit un procédé de reconstitution de portions de signal vocal inacceptables. Pour ce faire, le signal vocal normalement reçu est appliqué à une batterie de filtres passe-bandes adjacents dont l'ensemble couvre la bande de fréquences totale du signal original. Le signal ainsi fourni par le canal de chaque filtre est traité pour en déduire deux informations, l'une relative à la fréquence et l'autre à l'amplitude du signal de sous-bande. La fréquence est déduite par écrétage du signal reçu et détection des passages par zéro du signal ecrêté.

Cette méthode de reconstition de signal ne peut s'appliquer directement à une transmission numérique de signal vocal et encore moins à une telle transmission dans laquelle le signal est traité selon les techniques BCPCM avec répartition du signal en sous-bandes, surtout lorsque l'on désire minimiser le délai supplémentaire introduit à la réception des signaux vocaux.

La présente invention a donc pour objet un procédé de compensation et de correction d'erreurs dues à la perte de paquets d'échantillons de signaux vocaux, simple, efficace et introduisant un délai supplémentaire de décodage réduit.

L'invention s'applique plus particulèrement à un système de transmission utilisant un procédé de codage dit prédictif dans lequel un signal basses fréquences ou signal en bande de base est dérivé du signal vocal à coder, lequel signal basses fréquences est ensuite réparti entre plusieurs sous-bandes dont les contenus sont quantifiés séparément. Le procédé de reconstitution d'informations comporte notamment une recherche de la période du signal reçu dans chaque sous-bande avant la perte d'information et une reconstitution du signal de chaque sous-bande de manière à conserver cette périodicité tout en évitant les transitions brusques entre les signaux provenant d'informations reçues et ceux obtenus par reconstitution.

D'autres objets, caractéristiques et avantages de la présente invention ressortiront de la description suivante faite en se référant aux dessins annexés qui représentent respectivement:

Figures 1A et 1B : représentent respectivement un émetteur et un récepteur de l'art antérieur pouvant être utilisés dans un système auquel s'applique l'invention.

Figure 2: format d'un bloc de bits sortant de l'émetteur de la figure 1A.

Figure 3: schéma de principe d'un réseau de transmission numérique auquel s'applique l'invention.

Figure 4: format d'un paquet de bits sortant du dispositif 40 de la figure 3.

Figures 5 et 6: illustration d'un mode de réalisation de l'invention.

Figure 7: format d'un type de paquet de bits du réseau de transmission auquel s'applique l'invention.

Figure 8: schéma de principe du récepteur permettant de réaliser l'invention.

## Description détaillée de l'invention

La présente invention s'applique particulièrement bien à un système de transmission du genre dans lequel le codage du signal vocal est réalisé à l'aide d'un codeur de type prédictif. Ce codeur dit VEPC (Voice Excited Predictive Coder) ainsi que le décodeur correspondant ont été décrits dans le brevet européen résultant d'une demande déposée par la demanderesse le 08.12.78 et publiée sous le numéro 0002998, dans la demande de brevet européen déposée par la demanderesse le 30 avril 1982 sous le numéro 82430012.3, ainsi que dans une présentation faite par D. Esteban, C. Galand, D. Mauduit et J. Menez à ICASSP 1978, Tulsa Oklahoma, sous le titre "9.6/7.2 kbps Voice Excited Predictive Coder (VEPC)". Brevet, demande de brevet et article dont on considérera les contenus comme étant incorporés par référence dans ce texte.

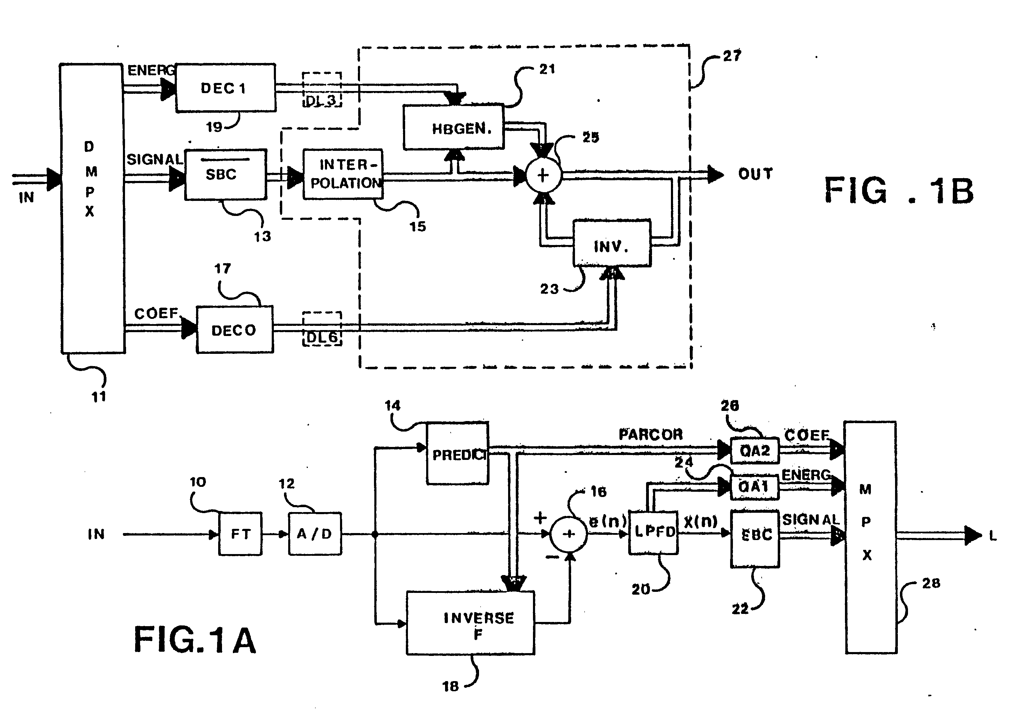

Pour les besoins de la présente invention, on a représenté sur la figure 1A, un émetteur comprenant un codeur du type prédictif (VEPC), et sur la figure 1B le récepteur correspondant.

Le signal vocal est appliqué sur l'entrée IN du codeur. Il est filtré en 10 à l'aide d'un filtre passe bas (FT) transmettant à un convertisseur analogique-numérique (A/D) 12 un signal compris dans la bande de fréquences dite téléphonique (fréquences $\leqslant$ 3400 Hz). Dans le convertisseur 12, le signal est échantillonné à 8 KHz et codé en PCM à 12 bits. Les échantillons codés en PCM sont ensuite recodés par application de techniques dites BCPCM (Block companded PCM). Pour effectuer ce recodage, les signaux sortant du convertisseur 12 sont envoyés à la fois dans un prédicteur de paramètres (PREDICT) 14, dans un soustracteur 16 et dans un filtre inverse (INVERSE F) 18. Le prédicteur 14 déduit du signal qu'il reçoit un groupe de coefficients caractéristiques du signal vocal à traiter lesquels coefficients seront notamment des coefficients dits d'autocorrélation partielle ou PARCOR servant à ajuster le filtre inverse 18. Le filtre inverse est réalisé selon le réseau maillé tel qu'il a été défini par J.D. Markel et al dans leur ouvrage intitulé: "Linear Prediction of Speech" au paragraphe 5.4. Le signal fourni par le filtre inverse 18 représente en fait la partie prévisible du signal vocal. Le soustracteur 16, retranchant du signal fourni par le convertisseur 12 le signal issu du filtre inverse 18, fournit un signal dit résiduel $e_{(n)}$ dépourvu d'une partie de la redondance du signal vocal d'origine. Le signal résiduel $e_{(n)}$ est filtré dans un filtre passe-bas décimateur (LPFD) 20. Le dispositif 20 fournit d'une part les échantillons $X_{(n)}$ d'un signal basses fréquences dit signal résiduel en bande de base dont le spectre est limité à une bande de fréquences 300 à 1000 Hz par exemple, et d'autre part une information relative à l'énergie du signal contenu dans la bande de fréquences hautes éliminée par le filtre 20. Le signal résiduel en bande de base est soumis à un codage en sous-bandes dans un dispositif (SBC) 22. Ce dernier dispositif procède à une requantification de type à allocation dynamique des bits de quantification entre les sous-bandes et délivre une information désignée par SIGNAL (ou S). L'énergie de la bande de fréquences hautes (1000-3400 Hz par exemple) du signal résiduel est requantifiée en 24 (QA1) pour fournir une information désignée par ENERG (ou E). Quant aux coefficients d'autocorrélation partielle dits aussi coefficients PARCOR, ils sont recodés par requantification en 26 (QA2) pour fournir une information désignée par COEF (ou $K_i$). Ces trois types d'informations, à savoir COEF, ENERG et SIGNAL constituent une représentation codée caractérisant pleinement le signal vocal soumis à l'entrée IN du codeur et filtré en 10. La transmission sur une ligne L du signal vocal ainsi codé est réalisée à l'aide d'un multiplexeur 28.

On rappellera tout d'abord que le système travaillant en BCPCM, le traitement pour codage du signal vocal se fait sur des blocs d'échantillons représentant des tronçons de signal consécutifs de 20 millisecondes (ms).

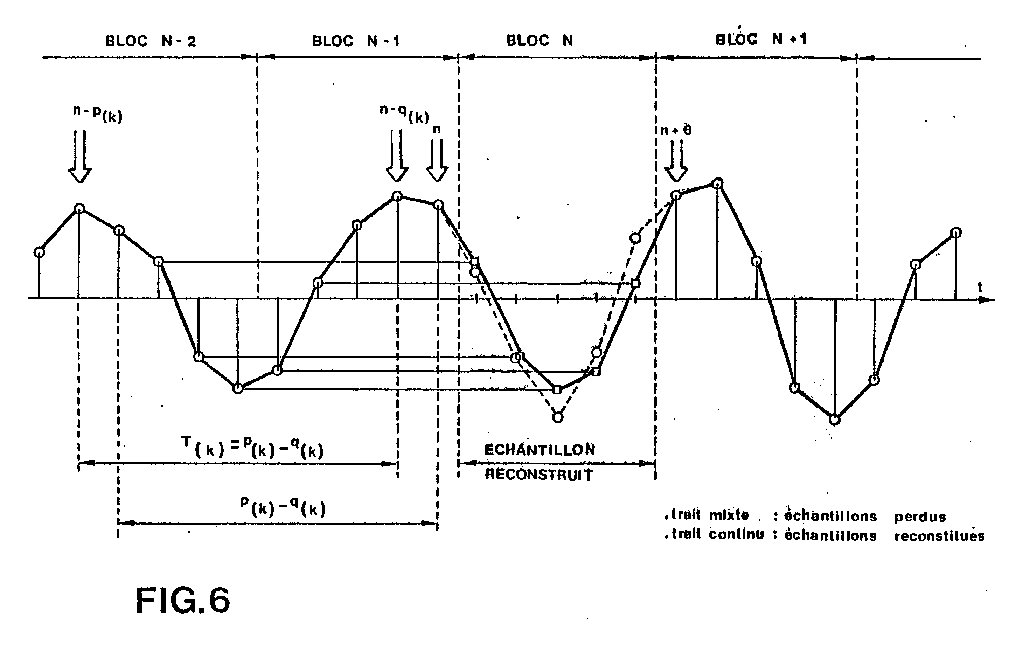

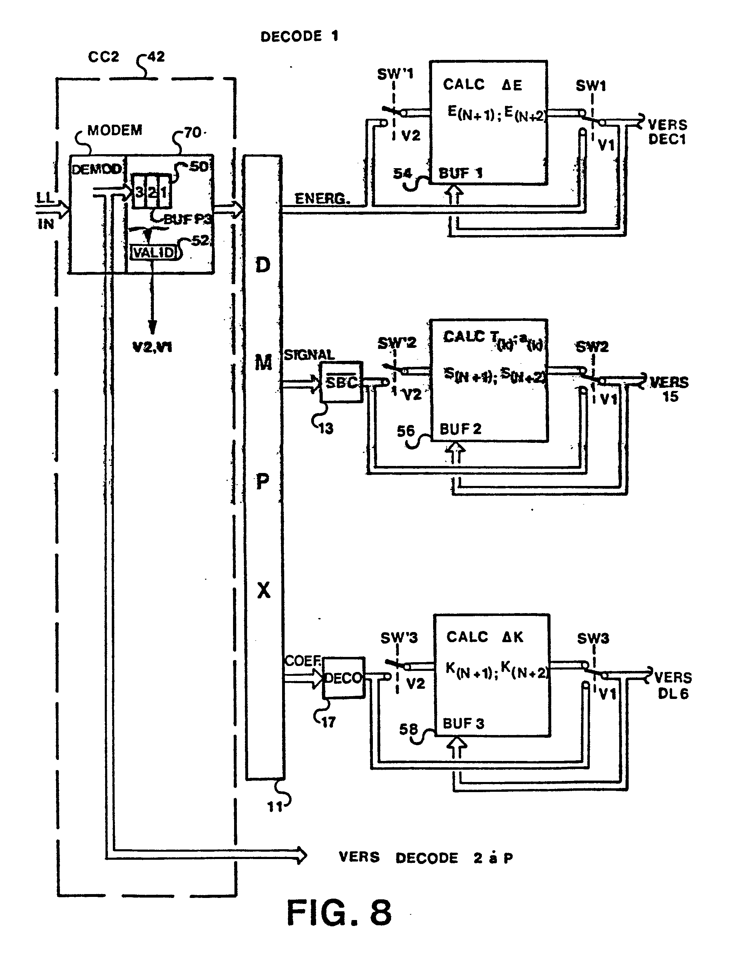

Le dispositif 14 prédicteur de paramètres a été décrit en détail notamment dans le brevet européen 0002998 et plus précisément aux figures 6 et 7 dudit brevet. La méthode sur laquelle est basée le dispositif met notamment en oeuvre les algorithmes proposés par J. Le Roux et C. Gueguen dans un article publié par IEEE Transactions on Acoustics, Speech and Signal Processing de juin 1977.

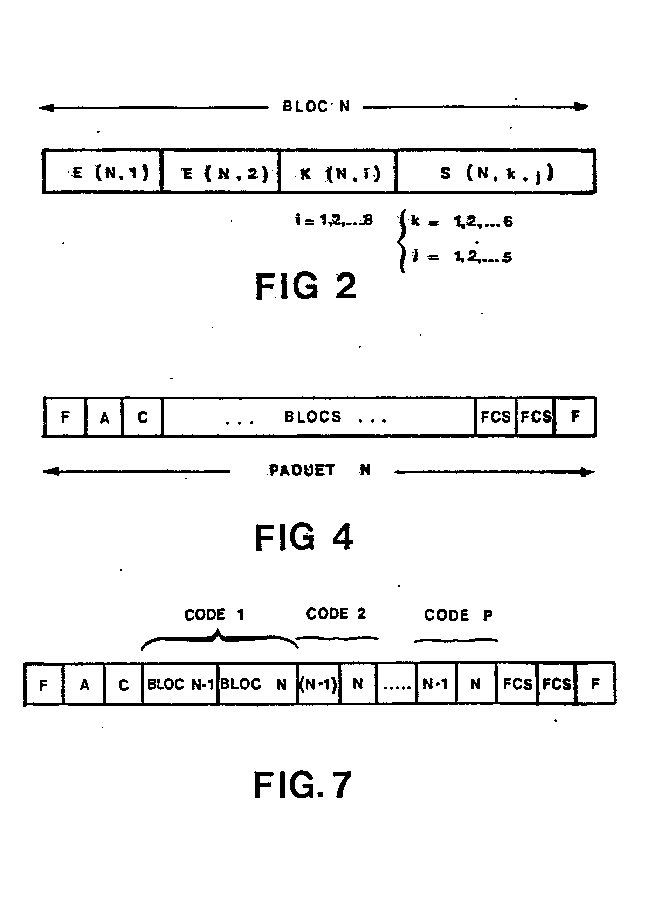

Le dispositif 20 comporte un filtre numérique passe-bas dont la fréquence limite supérieure est $\leqslant$ 1000 Hz. Le signal résiduel en bande de base représenté par les échantillons $X_{(n)}$ peut donc être re-échantillonné à 2 KHz. Ce re-échantillonnage est réalisé en pratique par une opération dite de décimation qui consiste en l'abandon périodique de certains échantillons. Le dispositif 20 comporte en outre les moyens permettant de mesurer l'énergie (E) contenue dans la bande hautes fréquences 1000-3400 Hz éliminée par le filtre passe-bas du dispositif 20. Un mode de réalisation du dispositif 20 a été décrit dans le brevet européen 0002998 (voir notamment la figure 2 dudit brevet). On y remarquera en outre la présence des moyens de décimation chargés de ramener la fréquence d'échantillonnage du signal à une valeur inférieure à celle d'origine.

On a représenté sur la figure 1B le récepteur qui, placé à l'autre extrémité de la ligne L reconstruirait le signal vocal d'origine. Un démultiplexeur (DMPX) 11 traite l'information reçue de manière à séparer les uns des autres les composants ENERG, SIGNAL et COEF. Les données de SIGNAL sont décodées en 13 (SBC̃) puis soumises à des opérations d'interpolation en 15 destinées à ramener la fréquence d'échantillonnage du signal à sa valeur d'origine. Parallèlement à ces opérations, les données COEF et ENERG sont respectivement décodées en 17 (DECO) et 19 (DEC1). Les données sortant de l'interpolateur 15 et celles décodées en 19 servent à reconstituer en 21 (HBGEN) la bande hautes fréquences qui avait été éliminée par le filtre 20. Les coefficients fournis par le décodeur 17 servent à accorder un filtre 23 (INV) dont la sortie est additionnée en 25 aux données fournies par l'interpolateur 15 et le générateur de bande haute 21. L'additionneur 25 fournit les données qui après conversion en analogique (non représentée) fournissent une reproduction du signal vocal non comprimé d'origine, c'est-à-dire celui soumis à l'entrée IN du codeur de la figure 1A. On désignera par 27 la partie du récepteur située en aval des décodeurs SBC̃ (13), DECO (17) et DEC1 (19). Cette partie effectue des opérations dites de synthèse (SYNT.).

Les fonctions de codage et décodage décrites ci-dessus sont en pratique réalisées par un microprocesseur

3

programmé. On notera qu'en pratique, certaines opérations dont notamment les opérations de filtrage en 22 et 13 introduisent des retards. Pour compenser ces retards, on placera des lignes à retard sur les trajets des informations ENERG et COEF (voir DL3 et DL6 sur la figure 8 du brevet européen 0002998 sus mentionné). Ceci explique la présence des lignes à retard DL3 et DL6 de 40 ms représentées en pointillés sur le schéma de la figure 1B ci-jointe. A noter aussi que les lignes à retard peuvent être placées différemment et notamment être partagés entre émetteur (fig. 1A) et récepteur (fig. 1B).

On a représenté sur la figure 2 le schéma du format du Nième bloc de bits sortant du multiplexeur 28 et représentant un tronçon de 20 ms de signal vocal codé. On y trouve tout d'abord deux mots de 4 bits chacun ($E_{(N,1)}$ et $E_{(N,2)}$) représentant deux informations d'énergie fournies par le canal ENERG à raison d'un mot toutes les 10 ms. Ensuite viennent huit coefficients PARCORS $K_{(N,i)}$ pour i = 1, 2, ... 8 fournis sur le canal COEF par le prédicteur 14 et le quantificateur $QA_2$ (28 bits en tout par exemple). Puis viennent les informations du canal SIGNAL, $S_{(N,k,j)}$ où k représente le rang de la sous-bande considérée (donc k = 1, 2,... 6 puisque l'on a choisi un système dans lequel le banc de filtres SBC répartit le signal entre six sous-bandes), et j = 1, 2, ..., 5 représente le rang de l'échantillon dans le bloc d'échantillons considéré. On a en effet choisi d'utiliser cinq échantillons par sous-bande pour représenter un tronçon de 20 millisecondes de signal.

Donc, pour les besoins de la présente invention, on désignera par $S_{(N,k,j)}$ les échantillons des signaux de sous-bandes.

En pratique, les termes $S_{(N,k,j)}$ sont codés en BCPCM (Block Companded PCM) selon les indications fournies en 1974 par A. Croisier au Séminaire International de Communications Numériques de Zurich.

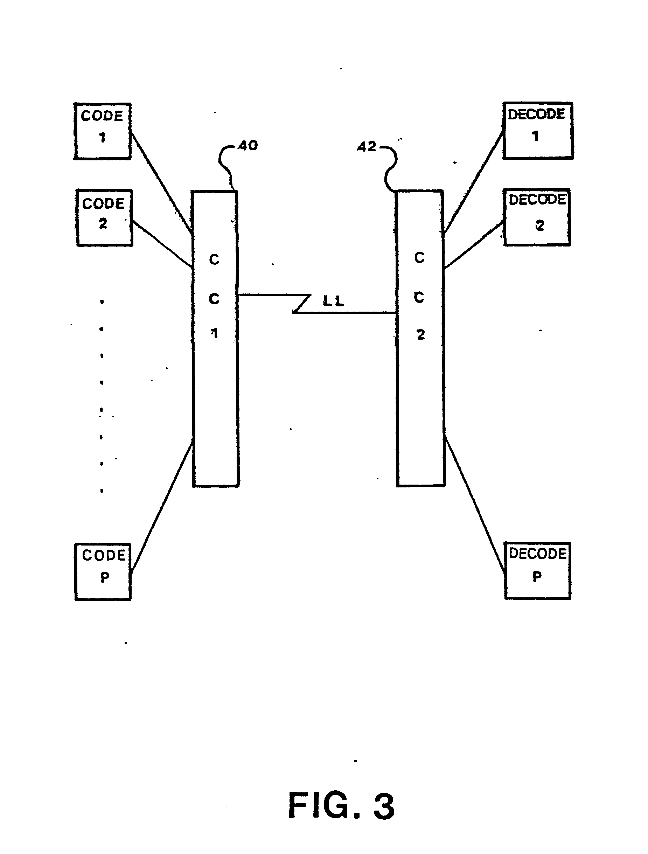

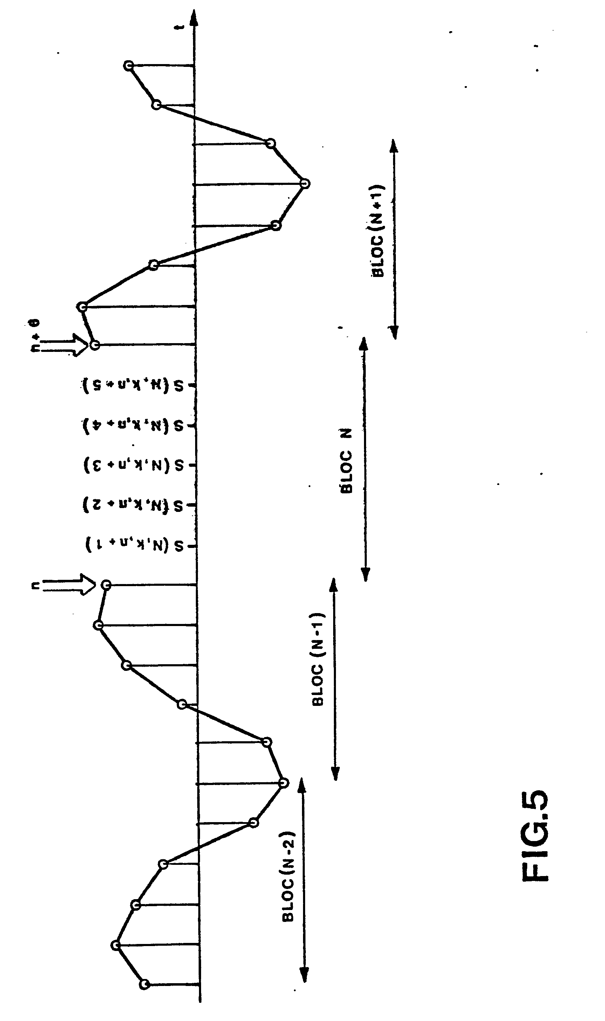

Bien que l'invention puisse s'appliquer à une liaison point à point simple, elle est plus particulièrement utile dans un réseau de transmission plus complexe, et notamment dans un réseau du genre représenté sur la figure 3. Sur cette figure, on a représenté schématiquement P codeurs désignés par CODE 1 à CODE P. Chacun de ces codeurs, qui peut être du type représenté sur la figure 1A, fournit toutes les 20 ms un bloc de bits semblable à celui de la figure 2. Ces blocs de bits sont prélevés par un concentrateur ou contrôleur de communication CC1 (40) qui les groupe en paquets avant de les transmettre vers leurs destinataires rattachés à des décodeurs DECODE 1 à DECODE P, en passant par un canal numérique LL et un contrôleur de communication CC2 (42). Pour les besoins de la présente invention, il suffit de noter que le contrôleur de communications CC1 comprime chaque bloc de 20 ms de signal vocal en un bloc de bits dont la transmission s'effectue en 2 ms. Il groupe ensuite P blocs (un de chaque codeur) ou 2 P blocs (2 de chaque codeur) et y ajoute des bits de gestions du trafic, de manière à constituer un paquet (voir figure 4) qui sera transmis sur la ligne LL en passant éventuellement par un modem (non représenté). Ceci étant, on peut compenser les retards affectant l'information SIGNAL mentionnés ci-dessus, en retardant les informations ENERG, et COEF de 20 ou 40 ms selon que le groupage mentionné ci-dessus se fait par P ou par 2 P blocs. On pourra aussi partager ces retards entre le codeur de l'émetteur (fig. 1A) et le décodeur du récepteur (fig. 1B) comme mentionné plus haut. Ceci aurait l'avantage de permettre la transmission dans un même paquet de blocs homogènes, c'est-à-dire contentant des termes Energie ($E_{(N,1 \text{ et } 2)}$), Parcors ($K_{(N,i)}$) et SIGNAL ($S_{(N,k,j)}$) appartenant à un même tronçon de signal vocal au lieu d'appartenir à des tronçons différents.

On a représenté sur la figure 4, le Nième paquet de bits construit par le contrôleur CC1. Ce paquet se présente selon un format de type dit HDLC ou SDLC. C'est-à-dire qu'il commence et se termine par un octet (F) dit drapeau, pouvant être égal à 01111110 par exemple. Puis viennent :

- une information dite d'adresse (A) qui, lorsque le réseau est relativement complexe et comporte un grand nombre de contrôleurs entre codeur émetteur et décodeur récepteur, désigne les adresses des contrôleurs successifs définissant ainsi le trajet à suivre à travers ces contrôleurs;
- un numéro de paquet (C);
- les blocs de données proprement dites (BLOC); et,
- deux octets (FCS) de contrôle de validité.

A la réception, le contrôleur 42 extrait les bits du signal reçu pour reconstituer les paquets. Puis il vérifie la validité du numéro de chaque paquet reçu de manière à identifier et laisser tomber les paquets erronés, c'est-à-dire, notament ceux qui par suite d'une perturbation de transmission se révèlent invalides. Pour le système décrit ici ces paquets invalides sont considérés comme des informations perdues et qui doivent être reconstituées. Lorsque le paquet reçu est valide, le contrôleur 42 décomprime chaque bloc pour le ramener à 20 ms avant de l'orienter vers le décodeur auquel il est destiné. Les fonctions décrites ci-dessus sont réalisées dans le contrôleur 42 de manière conventionnelle, à l'aide d'un microprocesseur. Ce microprocesseur reçoit les paquets de bits et les traite à son rythme propre. De leur coté, les microprocesseurs des décodeurs traitent aussi les blocs de bits reçus, à leurs propres rythmes. Lorsqu'un décodeur a terminé le traitement d'un bloc de bits, il en sollicite un autre du contrôleur 42 en formulant une demande dite d'entrée/sortie en portant, au niveau logique haut, une ligne dite d'interruption. Le processeur du contrôleur 42 ne satisfait la demande d'entrée/sortie du décodeur qu'au moment où il est disponible pour le faire. Il existe donc un certain asynchronisme entre décodeurs DECODE 1 à P et contrôleur 42. Pour éviter toute perte de bits de données, on prévoit dans le contrôleur 42, une mémoire tampon ou mémoire provisoire séquentielle (non représentée). Les blocs de données décomprimés par le contrôleur 42 sont placés dans la mémoire tampon. C'est dans cette mémoire qu'ils sont ensuite prélevés par chaque décodeur lors de l'exécution d'opératiens d'entrée/sortie. Compte tenu de l'asynchronisme de fonctionnement entre les microprocesseurs, le contenu de la mémoire fluctue, on parle alors de mémoire élastique. Du fait de cette élasticité, au moment où un décodeur demande au contrôleur 42 son Nième bloc de bits, la mémoire élastique peut ou non contenir un ou plusieurs blocs suivants, c'est-à-dire les $(N+1)^{ième}$, $(N+2)^{ième}$ blocs, etc...

Elle peut aussi soit être vide à l'adresse du $N^{ième}$ bloc, soit comporter une indication selon laquelle le $N^{ième}$ bloc ayant été invalidé a été rejeté. Dans ces cas on parlera de paquet (donc aussi de bloc) perdu.

Compte tenu des propriétés des signaux vocaux, et compte tenu du type de codage de la voix utilisé ici, on remédie à la perte de blocs de bits de manière à éviter au mieux les distorsions ou perturbations de l'information vocale reçue en reconstituant les $E_{(N,1)}$, $E_{(N,2)}$, $K_{(N,i)}$ et $S_{(N,k,j)}$ perdus. D'une manière générale, pour ce qui est des échantillons $S_{(N,k,j)}$ on tire avantage du fait que le découpage du signal résiduel de bande de base en sous-bandes étroites devrait, en principe, laisser dans chaque sous-bande, des signaux quasi périodiques. On recherchera donc dans chaque sous-bande la période du signal telle que définie par les échantillons du (ou des) bloc(s) valides environnant le(s) bloc(s) perdu(s). On reconstituera ensuite le signal afin de combler le trou dû au bloc manquant, de manière à conserver la périodicité du contenu de chaque sous-bande.

On a représenté sur la figure 5, le signal d'une sous-bande comportant un bloc perdu (bloc N) que l'on aura identifié grâce au numéro (C) du bloc ou paquet correspondant (voir figure 4). On a désigné par j = n le rang du dernier échantillon valide reçu dans la sous-bande considérée. Les échantillons perdus sont donc $S_{(N,k,n+1)}$; $S_{(N,k,n+2)}$; $S_{(N,k,n+3)}$; $S_{(N,k,n+4)}$ et $S_{(N,k,n+5)}$. Pour reconstruire le tronçon de signal manquant, on va tout d'abord rechercher la période $T_{(k)}$ du signal représenté par les blocs (N-1) et (N-2), etc... de la sous-bande considérée ($k^{ième}$ sous-bande). Une fois cette période déterminée, on reconstruira les échantillons manquants. Plusieurs méthodes peuvent être utilisées pour déterminer $T_{(k)}$ et reconstruire les échantillons du $N^{ième}$ bloc, toutes seront ici basées sur le respect de la périodicité du signal de chaque sous-bande, donc de $T_{(k)}$.

On a représenté sur la figure 6 l'illustration d'un procédé; utilisable pour réaliser les fonctions mentionnées ci-dessus. Pour déterminer la période $T_{(k)}$, le procédé consiste à examiner les échantillons des blocs (N-1) et (N-2), etc... en partant de l'échantillon n de manière à déterminer les crêtes les plus proches du bloc perdu. Soit $n-p_{(k)}$ le rang de la première crête détectée et $n-q_{(k)}$ celui de la deuxième. On en déduit $T_{(k)}$ par calcul du nombre d'échantillons séparant lesdites crêtes; d'où:

$$T_{(k)} = p_{(k)} - q_{(k)}$$

Les cinq échantillons manquants sont alors reconstruits comme suit de manière à respecter la période $T_{(k)}$:

$$S(N,k,n+1) = S(N,k,n-T_{(k)})$$
$$S(N,k,n+2) = S(N,k,n-T_{(k)}+1)$$
$$S(N,k,n+3) = S(N,k,n-T_{(k)} + 2)$$
$$S(N,k,n+4) = S(N,k,n-T_{(k)}+3)$$
$$S(N,k,n+5) = S(N,k,n-T_{(k)}+4)$$

La reconstitution des échantillons manquants par répétition d'échantillons précédents telle que décrite ci-dessus a l'avantage d'être simple. Elle présente cependant quelques inconvénients notamment au niveau des limites entre le bloc manquant et les deux blocs qui l'entourent.

Ces problèmes dits de raccordement de blocs sont résolus ci-dessous. Après avoir mesuré la période $T_{(k)}$ du signal de sous-bande par analyse des blocs qui précèdent un (ou deux comme on le verra plus loin) bloc(s) manquant(s), on utilise l'information $T_{(k)}$ pour reconstruire les échantillons manquants en procédant de manière différente de celle décrite ci-dessus.

On notera tout d'abord que le système de transmission auquel on applique l'invention est conçu pour transmettre des paquets construits selon le format de la figure 7. Ce format est semblable à celui de la figure 4, à ceci près que chaque codeur fournit deux blocs consécutifs au lieu d'un. Toutefois, comme on le verra plus loin, l'invention n'est pas limitée au format de paquet de bits considéré. Elle s'applique aussi bien au format de la figure 7 qu'à celui de la figure 4.

En outre, on a vu plus haut qu'il existait une mémoire tampon dans le contrôleur de réception 42. Ceci étant, lorsque l'un des décodeurs DECODE 1, à DECODE P vient chercher dans le contrôleur 42 les blocs N-1 et N, la mémoire peut ou non contenir des blocs subséquents, c'est-à-dire N+1, N+2, N+3, N+4, etc...

Autrement dit des blocs antérieurs à un groupe de deux blocs perdus appartenant à un paquet perdu seront toujours disponibles. Par contre, des blocs postérieurs pourront ou non être disponibles. Le contrôleur 42 pourra aisément indiquer à tout moment si le système se trouve dans l'un ou l'autre cas. Il suffit par exemple de comparer les contenus de pointeurs d'adresses d'écriture et de lecture (non représentés ici) dans la mémoire tampon. L'indication de remplissage de la mémoire tampon ainsi définie permet de reconstruire différemment les échantillons des groupes de blocs de bits d'un paquet perdu, selon que les bits du paquet suivant sont disponibles ou non dans la mémoire tampon.

Dans le cas où le paquet contenant les blocs de bits de rang (N+1) et (N+2) est perdu alors que le paquet suivant c'est-à-dire celui contenant les blocs (N+3) et (N+4) n'est pas disponible, on procède à des opérations d'extrapolation, notamment en effectuant les opérations suivantes:

(1) Reconstitution des informations d'énergie et Parcors:
On répète la dernière information d'énergie $[E_{(N,2)}]$ et les Parcors reçus correctement.

$$E_{(N+1,1)} = E_{(N+1,2)} = E_{(N+2,1)} = E_{(N+2,2)} = E_{(N,2)}$$
$$K_{(N+1,i)} = K_{(N+2,i)} = K_{(N,1)} \text{ où } i = 1, 2, ..., 8.$$

(2) Echantillons $S_{(N,k,j)}$ des signaux de sous-bandes:
Comme on l'avait fait plus haut, on commence par déterminer la période $T_{(k)}$ (pour k = 1, 2, ..., 6), du signal

5

reçu dans chaque sous-bande et defini à partir du (ou des) dernier(s) paquet(s) reçu(s) correctement. Toutefois, pour calculer $T_{(k)}$, on a choisi ici de se baser sur les passages du signal par zéro. On compare donc uniquement les signes des échantillons reçus en remontant dans le temps. Tout changement de signe traduit un passage par zéro. On compte le nombre d'échantillons compris entre trois passages par zéro consécutifs et on attribue la valeur de ce nombre à $T_{(k)}$.

En supposant que le contrôleur 42 conserve en permanence les trois derniers blocs d'échantillons reçus, chaque bloc contenant cinq échantillons, quinze échantillons sont donc disponibles dans le contrôleur 42. Donc $T_{(k)}$ a une valeur numérique comprise entre 2 et 13. L'imprécision est d'autant plus grande que $T_{(k)}$ est faible. Pour remédier à cet inconvénient, si après une première détermination on trouve $T_{(k)} \leqslant 4$, on poursuit la mesure de période du signal de sous-bande en recherchant non plus trois mais cinq passages par zéro consécutifs. Les valeurs possibles de $T_{(k)}$ deviennent alors 2; 2,5; 3; 3,5; 4; 5; 6...; 13. Une fois $T_{(k)}$ déterminé, on en déduit une valeur $a_{(k)}$ telle que:

$a_{(k)} = \cos(2\pi/T_{(k)})$.

Les échantillons manquants, soit cinq échantillons du $(N+1)^{ième}$ bloc et cinq échantillons du $(N+2)^{ième}$, sont alors obtenus comme suit:

Pour le $(N+1)^{ième}$ bloc:

$S_{(N+1,k,1)} = 2a_{(k)} S_{(N,k,5)} - S_{(N,k,4)}$
$S_{(N+1,k,2)} = 2a_{(k)} S_{(N+1,k,1)} - S_{(N,k,5)}$
$S_{(N+1,k,3)} = 2a_{(k)} S_{(N+1,k,2)} - S_{(N+1,k,1)}$
$S_{(N+1,k,4)} = 2a_{(k)} S_{(N+1,k,3)} - S_{(N+1,k,2)}$
$S_{(N+1,k,5)} = 2a_{(k)} S_{(N+1,k,4)} - S_{(N+1,k,3)}$

Pour le $(N+2)^{ième}$ bloc:

$S_{(N+2,k,1)} = 2a_{(k)} S_{(N+1,k,5)} - S_{(N+1,k,4)}$
$S_{(N+2,k,2)} = 2a_{(k)} S_{(N+2,k,1)} - S_{(N+1,k,5)}$
$S_{(N+2,k,3)} = 2a_{(k)} S_{(N+2,k,2)} - S_{(N+2,k,1)}$
$S_{(N+2,k,4)} = 2a_{(k)} S_{(N+2,k,3)} - S_{(N+2,k,2)}$
$S_{(N+2,k,5)} = 2a_{(k)} S_{(N+2,k,4)} - S_{(N+2,k,3)}$

Ce qui précède revient à dire que l'on utilise les deux échantillons les plus proches de l'échantillon perdu pour engendrer celui-ci.

On notera que cette approximation permettrait de retrouver exactement les échantillons manquants dans le cas où les signaux de sous-bande sont parfaitement sinusoïdaux. En pratique cependant, les signaux de sous-bande correspondent à des harmoniques du fondamental et conservent un caractère quasi sinusoïdal pendant les sons voisés.

Dans le cas où le paquet contenant les bits des blocs de rangs $(N+1)$ et $(N+2)$ est perdu, tandis que le paquet suivant est disponible, on procède à des opérations d'interpolation, notamment:

(1) Pour les énergies:

On détermine un coefficient de variation moyenne $\Delta E$ des énergies à partir des valeurs d'énergies connues les plus proches dans le temps du paquet perdu.

$\Delta E = [E_{(N+3,1)} - E_{N,2)}]/5$

Puis on calcule les coefficients d'énergie des blocs perdus.

$E_{(N+1,1)} = E_{(N,2)} + \Delta E$
$E_{(N+1,2)} = E_{(N+1,1)} + \Delta E$
$E_{(N+2,1)} = E_{(N+1,2)} + \Delta E$
$E_{(N+2,2)} = E_{(N+2,1)} + \Delta E$

On obtient en fait une meilleure qualité acoustique du résultat en utilisant dans les formules d'énergies que l'on vient d'indiquer les termes d'énergie codes logarithmiquement. Ces termes sont en fait disponibles sous forme logarithmique dans le codeur/décodeur construit selon les schémas définis dans le brevet européen 0002998.

(2) Pour les coefficients PARCORS:

On détermine tout d'abord la variation moyenne $\Delta K$ telle que:

$\Delta K_i = [K_{(N+3,i)} - K_{(N,i)}]/3$

où $i = 1, 2, ..., 8$.

On obtient ensuite les deux ensembles de coefficients PARCORS recherchés en effectuant les opérations suivantes:

$K_{(N+1,i)} = K_{(N,i)} + \Delta K$.
$K_{(N+2,i)} = K_{(N+1,i)} + \Delta K_i$

(3) Pour les échantillons $S_{(N+1,k,i)}$ et $S_{(N+2,k,i)}$ des signaux de sous-bandes, on commence comme précédemment par rechercher la période $T_{(k)}$ du signal connu dans chaque sous-bande. A ceci près que l'on détermine dans le cas présent deux valeurs de $T_{(k)}$, l'une, $T_{1(k)}$, concernant le paquet qui précède dans le temps le paquet perdu, l'autre, $T_{2(k)}$, concernant le paquet qui suit le paquet perdu.

On calcule ensuite:
$$f_{1(k)} = 1/T_{1(k)} \text{ et } f_{2(k)} = 1/T_{2(k)}$$
On en déduit:
$$1/T_{(k)} = f_{(k,p')} = f_{1(k)} + p' \frac{f_{2(k)} - f_{1(k)}}{11} \ (1)$$
où p' = 1, 2, ..., 10.

donc $f_{(k,p')}$ peut être onsidéré comme une fréquence théorique du signal perdu de la sous-bande d'ordre k, et permet de définir un terme $T_{(k)} = 1/f_{(k\ p')}$.

On calcule les termes $a_{(k,p')} = \cos(2\pi f_{(k,p')})$
Les termes $a_{(k,p')}$ servent à engendrer les échantillons perdus comme suit:

$$S_{(N+1,k,1)} = 2a_{(k,1)} S_{(N,k,5)} - S_{(N,k,4)}$$
$$S_{(N+1,k,2)} = 2a_{(k,2)} S_{(N+1,k,1)} - S_{(N,k,5)}$$
$$S_{(N+1,k,3)} = 2a_{(k,3)} S_{(N+1,k,2)} - S_{(N+1,k,1)}$$
$$S_{(N+1,k,4)} = 2a_{(k,4)} S_{(N+1,k,3)} - S_{(N+1,k,2)}$$
$$S_{(N+1,k,5)} = 2a_{(k,5)} S_{(N+1,k,4)} - S_{(N+1,k,3)}$$
$$S_{(N+2,k,1)} = 2a_{(k,6)} S_{(N+1,k,5)} - S_{(N+1,k,4)}$$
$$S_{(N+2,k,2)} = 2a_{(k,7)} S_{(N+2,k,1)} - S_{(N+1,k,5)}$$
$$S_{(N+2,k,3)} = 2a_{(k,8)} S_{(N+2,k,2)} - S_{(N+2,k,1)}$$
$$S_{(N+2,k,4)} = 2a_{(k,9)} S_{(N+2,k,3)} - S_{(N+2,k,2)}$$
$$S_{(N+2,k,5)} = 2a_{(k,10)} S_{(N+2,k,4)} - S_{(N+2,k,3)}$$

En résumé, que le paquet qui suit un paquet perdu à reconstituer soit disponible ou pas, les échantillons du (des) bloc(s) perdu(s) sont reconstruits de manière à préserver la périodicité $[T_{(k)}]$ du signal de chaque sous-bande. Par exemple, chaque échantillon perdu pourra être reconstruit à partir d'une somme pondérée d'un nombre prédéterminé d'échantillons qui le précédent, ladite pondération comportant notamment un coefficient fonction de $T_{(k)}$.

En pratique, on pourra utiliser une formule du genre représenté en (1) pour interpoler linéairement les termes $a_{(k)}$. En procédant ainsi, on diminue la charge de calcul imposée au dispositif réalisant l'invention.

En outre, on améliorera aussi les transitions entre un bloc reconstitué et le bloc suivant reçu correctement en prévoyant une zone de transition au début dudit bloc suivant. Dans cette zone, on opérera par exemple une pondération entre échantillons reconstitués et échantillons reçus et on admettra pour valeur d'échantillon à retenir, le résultat de cette pondération. De plus, on pourrait économiser sur la puissance de calcul nécessaire à la réalisation de l'invention en combinant les méthodes utilisées, notamment en traitant dans tous les cas l'information SIGNAL ($S_{(N,k,j)}$) sans se préoccuper de la présence ou absence du bloc (ou paquet) qui suit celui qui est invalide. On procéderait alors toujours comme si ledit bloc ou paquet qui suit un bloc ou paquet n'était pas disponible, c'est-à-dire en procédant par extrapolation à partir du (ou des) blocs précédents.

La figure 8 représente de manière schématique un récepteur permettant de réaliser l'invention. On notera que ce dispositif utilise un dispositif semblable à celui de la figure 1B modifié pour permettre les reconstitutions de blocs d'échantillons perdus.

On notera tout d'abord que le signal reçu par le contrôleur CC2 est démodulé dans un MODEM utilisant les techniques DSB-QC. Ce modem représentant un moyen d'entrée traite le signal reçu par le récepteur, fournit les bits destinés à former les paquets (voir figures 4 et 7) à un microprocesseur 70 de traitement du signal. Le microprocesseur 70 comporte notamment un dispositif tampon BUF/P3 (50). Ce dispositif tampon peut conserver un nombre donné de paquets reçus. La validité du contenu de ces paquets est déterminée en VALID (52). Plus précisément VALID vérifie le numéro de chaque paquet pour s'assurer qu'il est bien en séquence avec le paquet précédent. Il vérifie aussi la validité des données proprement dites contenues dans le paquet reçu. Tout paquet invalide est signalé par une information locique (V1 = 0) et rejeté. L'information qu'il contient doit donc être reconstituée. Le microprocesseur 70 gère en outre la distribution du contenu de chaque paquet valide aux décodeurs DECODE 1 à DECODE P. Autrement dit les blocs de données sont orientés vers les décodeurs respectifs.

Les reconstitutions des signaux vocaux se font dans les décodeurs DECODE 1 à P correspondant au canal vocal considéré. Seul le premier décodeur a été représenté sur la figure 8. Les blocs de données (voir figure 2) concernant le décodeur DECODE 1 sont transmis au démultiplexeur DMPX (11) qui sépare les unes des autres les données concernant les informations ENERG, COEF et SIGNAL. On a supposé qu'à l'instant considéré, le paquet contenant les blocs d'ordre (N+1) et (N+2) était à soumettre au décodeur DECODE 1. Lorsque ce paquet est valide, les opérations à exécuter sont les mêmes que celles réalisées par le décodeur de la figure 1B. A ceci près que les termes du (ou des) derniers blocs valides sont conservés pour utilisation ultérieure éventuelle, c'est-à-dire pour être utilisés en cas de reconstitution d'informations ultérieures perdues.

Lorsque le paquet de bits reçu est invalide et doit être reconstitué, les dispositifs de reconstitution 54, 56 et 58 sont mis en jeu par l'utilisation de commutateurs commandés par des informations logiques V1 et V2 que l'on définira plus loin. Ces dispositifs 54, 56 et 58 réalisent les opérations décrites plus haut et destinées à engendrer les termes représentant les énergies, les coefficients Parcor et les échantillons de sous-bandes des blocs d'ordre N+1 et N+2 qui auraient été perdus.

La validité des paquets reçus est déterminée par un dispositif 52 qui délivre un signal logique V = 1 lorsque

# 0 139 803

le paquet considéré est valide. La validité d'un paquet se détermine par utilisation des éléments (A, C, FCS) encadrant les données proprement dites. Pour les besoins de la présente invention, un paquet invalide est considéré comme perdu. Dans la mémoire tampon 50 de la figure 8, les paquets ont été numérotés 1, 2, 3, etc... dans l'ordre de leur arrivée. On a aussi désigné par V1 et V2 les signaux logiques ou bits de validité des paquets 1 et 2, respectivement. Dans le cas présent, le paquet 1 de la mémoire tampon est celui contenant les blocs de rangs (N+1) et (N+2) à traiter.

Le dispositif 54 traitant les énergies possède une mémoire tampon BUF 1 conservant les termes $E_{(N,1)}$ et $E_{(N,2)}$ du bloc précédant celui à traiter. Les dispositifs 54, 56, 58 possèdent des moyens permettant de savoir si le dispositif tampon BUF/P3 contient déjà le paquet qui suit le paquet à traiter, c'est-à-dire celui contenant les blocs d'ordre (N+3) et (N+4) et si ces blocs sont valides. En cas de réponses négatives à ces deux questions, les énergies des blocs d'ordre (N+1) et (N+2) sont déterminées par extrapolation à partir des énergies du bloc d'ordre N comme on l'a vu plus haut. Par contre, en cas de réponses positives, les énergies sont déterminées par interpolation entre les blocs (N+3) et N après avoir calculé le terme $\Delta E$. A noter sur la figure 8, les commutateurs commandés par V1 et V2. Ces commutateurs sont représentés dans la position correspondant à V1 = 0 et V2 = 0.

Lorsque V1 = 1, c'est-à-dire que le paquet à traiter est valide, le décodeur se comporte comme celui de la figure 1B, à ceci près que les informations ENERG, SIGNAL et COEF des blocs considérés sont aussi stockés dans des registres BUF1, BUF2 et BUF3 respectivement.

Lorsque V1 = 0, les dispositifs de reconstitution 54, 56 et 58 entrent en jeu et les commutateurs sont connectés sur leurs sorties. Le fonctionnement des dispositifs de reconstitution 54, 56 et 58 dépend alors de V2, donc de la validité (ou présence) du paquet contenant les blocs (N+3) et (N+4). Si V2 = 0, les reconstitutions de blocs perdus se font par extrapolation selon les formules vues plus haut. Si V2 = 1, les reconstitutions, se font par interpolation (selon les expressions mentionnées aussi plus haut).

Les dispositifs 56 et 58 procèdent de manière similaire à celle du dispositif de reconstruction 54 à ceci près qu'au lieu d'opérer directement sur les informations fournies par le démultiplexeur DMPX (11), ils opèrent sur des termes décodés. SIGNAL passe donc d'abord par le décodeur SBC (13) avant d'être soumis au dispositif 56. Quant aux coefficients COEF, ils sont décodés en DECO (17) avant soumission au dispositif 58.

Pour compléter le récepteur de l'invention, il suffit de combiner le schéma de la figure 8 avec celui de la figure 1B en reliant les sorties de SW1, SW2 et SW3 aux entrées du décodeur DEC1, de l'interpolateur 15 et de la ligne à retard DL6 respectivement.

## Revendications

1. Procédé de reconstitution d'informations vocales perdues dans un système de transmission numérique de type BCPCM dans lequel, à l'émission, un signal basses fréquences est dérivé du signal vocal à coder, lequel signal basses fréquences est ensuite réparti entre plusieurs sous bandes dont les échantillons sont quantifiés séparément mais sont regroupés dans des blocs (ou paquets) d'échantillons, chaque bloc représentant un tronçon de signal vocal de durée prédéterminée, ledit procédé étant caractérisé en ce qu'il comprend les opérations suivantes:
   - analyse des blocs d'échantillons reçus de manière à détecter les blocs valides;
   - mémorisation provisoire séquentielle d'un nombre prédéterminé de blocs valides;
   - identification du bloc perdu (Nième bloc);
   - analyse dans chaque sous-bande du (ou des) bloc(s) valides mémorisés qui précède(nt) immédiatement le bloc perdu, de manière à déterminer un coefficient $T_{(k)}$ dit période du signal de la sous-bande de rang k, laquelle période est identifiée au nombre d'échantillons séparant deux crêtes de blocs valides de la sous-bande de rang k considérée; et,
   - reconstitution du signal de chaque sous bande à partir d'échantillons séparant lesdites crêtes.

2. Procédé selon la revendication 1 caractérisé en ce que ladite construction de signal de sous-bande est réalisée en déterminant chaque échantillon perdu à partir d'une somme pondérée d'un nombre prédéterminé d'échantillons qui le précèdent, ladite pondération comportant notamment un coefficient $a_{(k)}$ fonction de $T_{(k)}$ qui obéit a la relation:

$$a_{(k)} = \cos (2\,\pi/T_{(k)}).$$

3. Procédé selon la revendication 2 caractérisé en ce que ladite période obéit à la relation:

$$T_{(k)} = 1/f_{(k,p')}$$

où $f_{(k,p')} = f_{1(k)} + p' \frac{f_{2(k)}-f_{1(k)}}{11}$
$p' = 1, 2,... 10$
et $f_{1(k)} = 1/T_{1(k)}$
$f_{2(k)} = 1/T_{2(k)}$

$T_{1(k)}$ et $T_{2(k)}$ étant les périodes des signaux de la sous bande d'ordre k, périodes respectivement déterminées à partir des blocs d'échantillons qui précédent et suivent le bloc perdu.

8

4. Procédé selon l'une des revendications 1 à 3 caractérisé en ce qui ledit signal basses fréquences est constitué par un signal dit résiduel en bande de base d'un codage de type prédictif.

5. Procédé selon la revendication 4 dans lequel ledit codage prédictif fournit outre le signal résiduel en bande de base, une information relative à l'énergie de la bande hautes fréquences du signal vocal ainsi que des paramètres caractéristiques dudit signal vocal, ledit procédé étant caractérisé en ce que les paramètres et énergies relatives aux informations perdues sont reconstituées à la réception par extrapolations à partir d'informations reçues précédemment.

6. Procédé selon la revendication 4 dans lequel ledit codage prédictif fournit outre le signal résiduel en bande de base, une information relative à l'énergie de la bande hautes fréquences du signal vocal ainsi que des paramètres caractéristiques dudit signal vocal, ledit procédé étant caractérisé en ce que les paramètres et énergies relatives aux informations perdues sont reconstituées à la réception par interpolation à partir d'informations valides qui précèdent et suivent les informations perdues.

7. Système de transmission numérique de la voix entre un émetteur traitant le signal vocal par tronçons de durée prédéterminée, chaque tronçcon fournissant un bloc de bits contenant des informations (ENERG) relatives à l'énergie contenue dans une bande dite hautes fréquences, des coefficients (COEF) caractéristiques du signal vocal à émettre, et une information (SIGNAL) relative au contenu d'une bande basses fréquences du signal vocal à émettre et des moyens pour transmettre ledit bloc de bits vers un récepteur ledit récepteur reconstituant le signal vocal à partir des informations ENERG, COEF et SIGNAL contenues dans chaque bloc de bits reçu, ledit récepteur étant caractérisé en ce qu'il comporte:
- des moyens d'entrée (70) traitant le signal reçu pour reconstruire chaque bloc de bits;
- des moyens tampons (50) connectés aux moyens d'entrée et conservant au moins un bloc de bits;
- des moyens de contrôle de validité (52) connectés aux moyens tampons et vérifiant la validité des blocs reçus de manière à identifier les blocs dit perdus;
- des moyens (54, 56, 58) de reconstitution des blocs perdus à partir du ou des blocs environnants, lesdits moyens de reconstitution traitant séparément les informations ENERG, COEF et SIGNAL, en ajoutant respectivement aux ENERG et COEF des coefficients de variation moyenne ΔE et ΔK définis à partir des blocs valides antérieurs, et en traitant les échantillons de SIGNAL selon l'une des revendications 1 à 6;
- des moyens de synthèse reliés auxdits moyens de reconstitution et auxdits moyens tampons lesdits moyens de synthèse fopurnissant le signal vocal reçu.

8. Système selon la revendication 7 dans lequel la transmission numérique de la voix est du type DSI dans lequel les signaux vocaux sont transmis en paquets, chaque paquet contenant au moins un bloc de bits de chaque source active de signaux vocaux, chaque bloc contenant une information sur l'énergie du signal vocal (ENERG), des coefficients (COEF) et une information (SIGNAL) représentant un signal basses fréquences dit résiduel en bande de base.

9. Système de transmission selon la revendication 8 caractérisé en outre en ce que lesdits moyens de reconstitution utilisent des méthodes dites d'interpolation mettant en jeu les blocs adjacents au bloc perdu.

**Patentansprüche**

1. Verfahren zur Wiederherstellung von Sprachinformationen, die in einem digitalen Übertragungssystem vom Typ BCPCM verloren gingen, bei dem während der Sendung ein Niederfrequenzsignal vom zu codierenden Sprachsignal abgeleitet wird, dieses Niederfrequenzsignal dann auf mehrere Unterbänder verteilt wird, deren Abtastwerte getrennt quantifiziert werden, um dann in Blöcke (bzw. Pakete) zusammengefasst zu werden, die jeweils einen Abschnitt vorbestimmter Dauer des Sprachsignals darstellen, wobei das genannte Verfahren durch folgende Schritte gekennzeichnet ist :
- Analyse der empfangenen Abtastwertblöcke, um dadurch gültige Blöcke festzustellen;
- provisorische sequentielle Einspeicherung einer vorgegebenen Anzahl von gültigen Blöcken,
- Kennzeichnung des verlorenen Blocks (n-ter Block);
- in jedem Unterband, Analyse des oder der eingelesenen gültigen Blöcke, die unmittelbar vor dem verlorenen Block stehen, um derart einen Koeffizienten $T_{(k)}$, Signalperiode des Unterbandes vom Rang k genannt, zu bestimmen, wobei die genannte Periode aufgrund der Anzahl der Abtastwerte erkannt wird, die jeweils zwei Spitzenwerte gültiger Blöcke im betreffenden Unterband vom Rang k trennen, und
- von den diese Spitzenwerte trennenden Abtastwerten ausgehend, Wiederherstellung des Signals von jedem Unterband.

2. Verfahren nach Anspruch 1, dadurch gekennzeichnet, dass der genannte Aufbau des Unterbandsignals dadurch erreicht wird, dass jeder verlorene Abtastwert von einer gewichteten Summe einer vorgegebenen Anzahl ihm vorlaufender Abtastwerte ausgehend bestimmt wird, wobei diese Bewertung unter anderem einen Koeffizienten $a_{(k)}$ aufweist, der von $T_{(k)}$ abhängt und folgender Beziehung entspricht:

$$a_{(k)} = \cos (2\,\pi/T_{(k)}).$$

3. Verfahren nach Anspruch 2, dadurch gekennzeichnet, dass die genannte Periode nachstehender Beziehung folgt:

$$T_{(k)} = 1/f_{(k,p')}$$

oder

# 0 139 803

$$f_{(k,p')} = f_{1(k)} + p' \cdot \frac{f_{2(k)} - f_{1(k)}}{11}$$
$$p' = 1, 2, \ldots 10$$

und

$$f_{1(k)} = 1/T_{1(k)}$$
$$f_{2(k)} = 1/T_{2(k)}$$

wobei $T_{1(k)}$ und $T_{2(k)}$ Signalperioden des Unterbandes vom Rang k sind und diese Perioden jeweils auf Grundlage der Abtastwertblöcke bestimmt werden, die vor dem verlorenen Block stehen sowie diesem folgen.

4. Verfahren nach einem der Ansprüche 1 bis 3, dadurch gekennzeichnet, dass das genannte Niederfrequenzsignal aus einem sogenannten Grundband-Restsignal einer Codierung vom Vorhersagetyp besteht.

5. Verfahren nach Anspruch 4, bei dem die genannte Vorhersagecodierung abgesehen vom Grundband-Restsignal eine Information bezüglich der Energie des Hochfrequenzband-Sprachsignals liefert sowie auch die charakteristischen Parameter des genannten Sprachsignals, wobei das genannte Verfahren weiter dadurch gekennzeichnet ist, dass die Parameter und die Energie der verlorenen Informationen beim Empfang durch Extrapolation auf der Grundlage vorher erhaltener Informationen wiederhergestellt werden.

6. Verfahren nach Anspruch 4, bei dem die genannte Vorhersagecodierung abgesehen vom Grundband-Restsignal eine Information über die Energie des Hochfrequenzband-Sprachsignals liefert sowie auch die charakteristischen Parameter des genannten Sprachsignals, wobei das genannte Verfahren weiter dadurch gekennzeichnet ist, dass die Parameter und die Energie der verlorenen Informationen beim Empfang durch Interpolation auf Grundlage der gültigen Informationen wiederhergestellt werden, die vor und nach den verlorenen Informationen stehen.

7. Digitales Stimmenübertragungssignal zwischen einem Sender, der das Sprachsignal im Abschnitten vorgegebener Länge verarbeitet, wobei jeder Abschnitt einen Bitblock liefert, der Informationen (ENERG) über die in einem sogenannten Hochfrequenzband vorhandene Energie enthält sowie für das zu übertragende Sprachsignal charakteristische Koeffizienten (COEF) und eine Information (SIGNAL) über den Inhalt eines Niederfrequenzbandes des auszugebenden Sprachsignals, und Mitteln, um den genannten Bitblock einem Empfänger zu übertragen, der die in jedem empfangenen Bitblock eingearbeiteten Informationen ENERG, COEF und SIGNAL auswertet, um das Sprachsignal wiederherzustellen, und der genannte Empfänger durch folgende Mittel gekennzeichnet ist:

- Eingabemittel (70), die das empfangene Signal verarbeiten und den Bitblock wiederherstellen;
- Puffermittel (50), die mit den Eingabemitteln verbunden sind und zumindest einen Bitblock aufbewahren;
- Mittel zur Gültigkeitsprüfung (52), die mit den Puffermitteln verbunden sind und die Gültigkeit der empfangenen Blöcke überprüfen, um derart die sogenannten verlorenen Blöcke zu erkennen;
- Mittel (54, 56, 58), um die verlorenen Blöcke mit Hilfe des oder der sie umgebenden Blöcke wiederherzustellen, wobei diese Wiederherstellungsmittel die Informationen ENERG, COEF und SIGNAL getrennt behandeln, d.h. dass sie die mittleren Variationskoeffizienten $\Delta E$ und $\Delta K$, die aufgrund früher geprüfter Blöcke definiert wurden, jeweils ENERG und COEF hinzufügen und die Abtastwerte von SIGNAL nach den Ansprüchen 1 bis 6 verarbeiten;
- Synthesemittel, die mit den genannten Wiederherstellungsmitteln und Puffermitteln verbunden sind und das empfangene Sprachsignal erstellen.

8. System nach Anspruch 3, bei dem die digitale Übertragung der Stimme vom Typ DSI (Selektive Diffusion der Information) ist, die Sprachsignale paketweise übertragen werden, jedes Paket zumindest einen Bitblock von jeder aktiven Sprachsignalquelle aufweist, jeder Block zumindest eine Information über die Energie des Sprachsignals (ENERG), Koeffizienten (COEF) und eine Information (SIGNAL) enthält,

9. Übertragungssystem nach Anspruch 8, weiterhin dadurch gekennzeichnet, dass die genannten Wiederherstellungsmittel sogenannte Interpolationsverlorenen Block liegen.

## Claims

1. A method of reconstructing lost data in a digital voice transmission system of the BCPCM type wherein a low-frequency signal is derived at the transmitting end from the voice signal to be encoded and is then distributed among a plurality of sub-bands the sampled contents of which are individually quantized, but are regrouped into blocks (or packets) representing each a voice signal segment of predetermined duration, said method being characterized in that it comprises the steps of:
- analyzing the received blocks of samples to detect valid blocks,
- sequentially buffering a predetermined number of valid blocks,
- identifying the lost block (Nth block),
- analyzing within each sub-band the buffered valid block(s) immediately preceding the lost block so as to determine a coefficient $T_{(k)}$ termed period of the signal in the sub-band of rank k, said period being identified by means of the number of samples between the peaks of two valid blocks in the sub-band of rank k of interest, and
- reconstructing the signal in each sub-band from samples separating said peaks.

2. The method of claim 1, characterized in that said sub-band signal is reconstructed by determining each

10

lost sample from the weightrd sum of a predetermined number of samples preceding said lost sample, said sum being weighted, in particular, by using a coefficient $a_{(k)}$ which is a function of $T_{(k)}$ defined as
$a_{(k)} = \cos(2\pi/T_{(k)})$.

3. The method of claim 2, characterized in that said period is defined as
$T_{(k)} = 1/f_{(k,p')}$
where $f_{(k,p')} = f_{1(k)} + p' \frac{f_{2(k)} - f_{1(k)}}{11}$
$p' = 1, 2, ...10$
and $f_{1(k)} = 1/T_{1(k)}$
$f_{2(k)} = 1/T_{2(k)}$
$T_{1(k)}$ and $T_{2(k)}$ being the periods of the signal in the sub-band of rank k, said periods being respectively determined from the blocks of samples that precede and follow the lost block.

4. The method of any one of claims 1 to 3, characterized in that said low-frequency signal is comprised of a residual baseband signal obtained by means of a predictive type of coding.

5. The method of claim 4, wherein said predictive coding provides, in addition to the residual baseband signal, data relating to the energy of the high-frequency band of the voice signal as well as characteristic parameters thereof, said method being characterized in that the parameters and the energies relating to lost data are reconstructed at the receiving end by extrapolating from previously received data.

6. The method of claim 4 wherein said predictive coding provides, in addition to said residual baseband signal, data relating to the energy of the high-frequency band of the voice signal as well as characteristic parameters thereof, said method being characterized in that the parameters and energies relating to lost data are reconstructed at the receiving end by extrapolating from valid data preceding and following said lost data.

7. A digital voice transmission system for transmitting voice signals from a transmitter that processes the voice signal in segments of predetermined duration providing each a block of bits containing data (ENERC) relating to the energy contained in a high-frequency band, coefficients (COEF) characteristics of the voice signal to be transmitted and data (SIGNAL) relating to the contents of a low-frequency band of said voice signal to be transmitted, and means for transmitting said block of bits to a receiver, said receiver reconstructing the voice signal from said ENERG, COEF and SIGNAL data contained in each received block of bits, said receiver being characterized in that it comprises:
- input means (70) for processing the received signal in order to reconstruct each block of bits,
- buffer means (50) connected to the input means and storing at least one block of bits,
- validity checking means (52) connected to said buffer means for checking the validity of received blocks in order to identify lost blocks,
- means (54, 56, 58) for reconstructing lost blocks from one or more surrounding block(s), said reconstruction means processing the ENERG, COEF and SIGNAL data separately, mean variation coefficients $\Delta E$ and $\Delta K$ derived from previous valid blocks being added to said ENERG and COEF data, and SIGNAL samples being processed according to any one of claims 1 to 6,
- synthesizing means connected to said reconstruction means and to said buffer means for supplying the received voice signal.

8. The system of claim 7 wherein the digital transmission of voice signals is of the DSI type in which the voice signals are transmitted in packets containing each at least one block of bits from each active source of voice signals, each block containing data relating to the energy (ENERG) of the voice signal, coefficients (COEF) and data (SIGNAL) representing a low-frequency signal called residual baseband signal.

9. The system of claim 8, characterized further in that said reconstruction means employs a so-called interpolation process involving the use of blocks adjacent to the lost block.

FIG.1B

FIG.1A

BLOC N

| E (N,1) | E (N,2) | K (N,i) | S (N,k,j) |

$$i = 1,2,...8 \quad \begin{cases} k = 1,2,...6 \\ j = 1,2,...5 \end{cases}$$

# FIG 2

| F | A | C | ... BLOCS ... | FCS | FCS | F |

PAQUET N

# FIG 4

CODE 1     CODE 2     CODE P

| F | A | C | BLOC N-1 | BLOC N | (N-1) | N | ..... | N-1 | N | FCS | FCS | F |

# FIG. 7

FIG. 3

FIG.5

FIG.6

DECODE 1

FIG. 8

11